# EUROPEAN PATENT SPECIFICATION

(11) **EP 0 560 987 B1**
(45) Date of publication and mention of the grant of the patent: **08.09.1999**
(21) Application number: 92920698.5
(22) Date of filing: 05.10.1992
(51) Int. Cl.: G11B 27/10, G01C 21/00, G01C 21/20, B60R 16/02

(54) **NAVIGATION APPARATUS FOR VEHICLES**
NAVIGATIONSVORRICHTUNG FÜR FAHRZEUGE
INSTRUMENT DE NAVIGATION POUR VEHICULES

(30) Priority: 04.10.1991 JP 25817291; 19.08.1992 JP 22010992
(43) Date of publication of application: 22.09.1993
(73) Proprietor: AISIN-AW KABUSHIKI KAISHA, Anjo-shi Aichi 444-11 (JP)
(72) Inventor: MORIMOTO, Kyoumi, Aichi 445 (JP); OZAKI, Naokazu 81, Isiike, Aza Yosida, Ooaza, Aichi 444-06 (JP); KATO, Kiyohide 4, Inaba Ushida-cho, Aichi 472 (JP); SUGIURA, Naoko 2-3, Zougahana Wakabayashi, Aichi 473 (JP)
(74) Representative: VOSSIUS & PARTNER
(86) International application number: PCT/JP92/01293
(87) International publication number: WO 93/07447

(56) References cited:
- EP-A- 0 158 214
- EP-A- 0 341 645
- WO-A-91/18345
- DE-A- 3 122 901
- JP-A- 1 116 406
- JP-A- 1 169 316
- JP-A- 62 108 111
- JP-A- 62 151 713
- JP-A- 63 208 092
- JP-A- 63 259 412
- JP-U- 61 158 817

## Description

### SPECIFICATION

The present invention relates to a vehicle navigation apparatus which is capable of executing a voice and/or a screen display guidance for navigating a vehicle to a destination point when the vehicle is driven by a driver.

A conventional vehicle navigation apparatus, for example, disclosed in JP-A-60-202307, is operated in such a manner, when it is detected that a vehicle reaches a designated specific area in an intersection, the navigation apparatus notifies a correct direction to which the vehicle should next proceed after passing this intersection of a driver by means of a voice and/or a display guidance. Another conventional vehicle navigation apparatus, for example, disclosed in JP-A-63-21199, is operated to make a voice guidance after a vehicle has run a predetermined distance past an intersection.

However, in these conventional navigation apparatus, the navigation guidance is issued punctually in accordance with predetermined procedure along a predetermined route no matter how the driver wants to know it. Accordingly, these conventional systems are not useful in that the navigation guidance is not always obtained when the driver wants it.

For example, in the case where the navigation guidance is not made until the vehicle has completely passed an intersection, the driver cannot know various information concerning an immediate next - approaching intersection, an intersection succeeding this immediate next - approaching intersection, or a target, before the vehicle passes this intersection. Therefore, it was difficult to know such oncoming information to be subsequently issued sufficiently beforehand so that the driver can ensure driving safety.

Furthermore, as the navigation guidance is automatically provided every time the vehicle has run a predetermined distance or every time a predetermined time has elapsed, the driver may feel a nuisance to hear it when he does not want it.

Namely, the conventional navigation apparatus is characterized in that it gives a driver the navigation information without taking account of driver's intention. Therefore, there was an inconvenience such that the navigation information was not obtained timely, even if the driver wanted to know it.

Furthermore, as numerous data such as maps, voice responses and so on are memorized in the same CDROM in a concentrated manner, it takes a long time to access a required data. Especially, in the case where two adjacent guidance information are issued during a limited time during a vehicle runs a short distance, the vehicle may proceed a significant distance while the necessary data is accessed in the massive CDROM and therefore it may happen that the navigation guidance is not given to a driver until the vehicle reaches immediately before the next target point. Thus, the driver may be forced to suddenly brake or steer the vehicle to change the course in accordance with the given guidance information, endangering the driving safety.

Further navigation apparatuses are known from DE-A-31 22 901, EP-A-0 314 398, EP-A-0 341 645, JP-A-1-169316, EP-A-0 158 214, JP-A-63-259412 and JP-A-62-108111.

In particular, EP-A-0 314 398 describes a navigation apparatus based on a present position calculating system. The navigation apparatus comprises present position calculating means, storing means for storing map information, guidance information and route information, manually operated request means for generating a request signal for requesting information regarding the next guidance point, control means for retrieving and notifying guidance information regarding the next guidance point and a voice output means for outputting guidance information processed by the control means. However, guidance information on the travelling direction can only be output at a guidance point e.g. an intersection. Outputting of guidance information at a current position e.g. between two intersections is not provided.

WO-A-91/18345 refers to a voice message decoding and buffering system. The system includes a microprocessor, a set of message buffers for storing voice messages and a bus which couples the message buffering system to a host computer and a CDROM. The system can be used in an automobile navigation system. It instructs the driver of a car on what route to take to a specified destination and orally advises the driver when he manually operates request means.

The conventional navigation apparatuses are disadvantageous in that a required information is not always given to a driver when or where he wants to really know it.

Accordingly, the present invention has a purpose, in view of above - described problems and disadvantages encountered in the prior art, to provide a vehicle navigation apparatus which is functionized to generate a voice response output of a navigation guidance immediately after a driver requests it.

Another purpose of the present invention is to provide a vehicle navigation apparatus which is capable of accessing a necessary voice guidance information in accordance with the driver's request in a short period of time.

The purposes are accomplished by the features of the claims.

The vehicle navigation apparatus in accordance with the present invention can be applicable to any kind of navigation apparatus, and especially can be suitably used for a vehicle navigation apparatus which executes a voice guidance in response to a driver's request in addition to an automatic voice guidance.
Fig.1 is a block diagram showing a system constitution of a vehicle navigation apparatus in accordance with the present invention;
Fig.2 is a view showing one example of voice data recorded in a CDROM;
Fig.3 is an explanatory view showing one example of a display screen displayed in a display section, wherein Fig.3(1) shows a usual screen and Fig.3(2) shows a screen displayed during a limited period of time when a navigation guidance is executed;
Fig.4 is a flow chart showing a voice response processing carried out in the vehicle navigation apparatus in accordance with the first embodiment of the present invention;
Fig.5 is an explanatory view showing data content in the buffers;
Fig.6 is a flow chart showing a voice response processing carried out in the vehicle navigation apparatus in accordance with the second embodiment of the present invention;
Figs.7 and 8 are flow charts showing the remainder of the flow chart shown in Fig.6; and
Fig.9 is an explanatory view showing data content in the buffers, in the voice response processing carried out in the vehicle navigation apparatus in accordance with the second embodiment of the present invention.

Hereinafter, referring now to the accompanying drawings, the present invention is explained in detail.

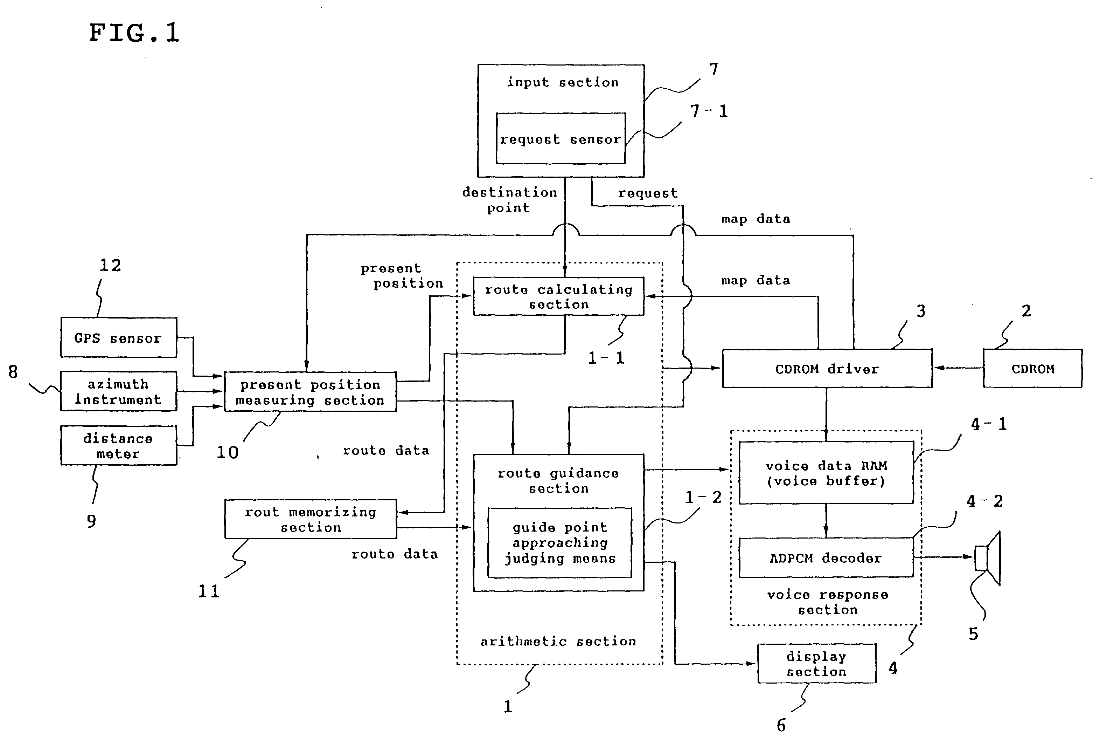

Fig.1 shows a hardware constitution of a vehicle navigation apparatus in accordance with the present invention. The present invention provides a navigation apparatus capable of communicating with a driver so as to guide the vehicle properly to a destination point. Namely, during the vehicle is navigated to the destination point, this navigation apparatus can provide a voice response of a guidance information immediately in response to the driver's request. On the other hand, when the driver does not issue any request, the navigation apparatus only provides an automatic voice response of the guidance information with an adequate caution sound when the vehicle passes a predetermined check point such as an intersection.

In this embodiment, the voice phrases to be generated during the vehicle is running are constructed by the combination of the following four items; (1) a caution sound, (2) a distance between the present vehicle position and the target object, (3) the target object, and (4) a direction to which the vehicle should proceed after passing the target object. For example, "pop" is used as a phrase representing the above - described caution sound (1), and "approximately 400m from here", "soon" and the like are used as phrases representative of the above - described distance from the present vehicle position to the target object (2).
Furthermore, "at Fujii - cho", "at a signal", "at an intersection not being equipped with a signal" and the like are used as phrases representative of the above - described target object (3), and "advance straight", "turn right" and the like are used as phrases representative of the above - described direction (4).

In Fig.1, the vehicle navigation apparatus includes an arithmetic section 1 executing an overall control of this system, a CDROM 2 storing navigation data such as maps and targets and voice data, a CDROM driver 3 for reading out necessary data from the CDROM 2 in accordance with a command from the arithmetic section 1 and writing it into a voice data RAM 4- 1 (hereinafter, referred to as "voice buffer"), a voice response section 4 for transforming the voice data synthesized in the voice buffer 4 - 1 into a voice signal by an ADPCM decoder4 - 2, a speaker 5 being connected to the voice response section 4 for generating a guidance voice in accordance with the transformed voice signal, a display section 6 for displaying a navigation guidance on a display screen and the like in response to driver's request or automatically, an input section 7 for inputting a destination point or requesting the navigation guidance, a present position measuring section 10 for identifying a present position of the vehicle, and a route memorizing section 11 for memorizing the route data in accordance with the destination point.

The arithmetic section 1 includes a route calculating section 1 - 1 for calculating an appropriate route leading to the destination point, and a route guidance section 1 - 2 for executing a voice guidance and/or a display guidance automatically or in response to the driver's request.

The route calculating section 1 - 1 calculates an appropriate route leading the destination point on the basis of the following three information; i.e. a target position information supplied from the input section 7, a present position information measured in the present position measuring section 10, and a map information supplied from the CDROM driver 3. And then, thus calculated route data is stored in the route memorizing section 11.

The route guidance section 1 - 2 has a function to judge whether or not a present position of the vehicle is approaching a predetermined check point on the vehicle proceeding line with reference to the route leading to the destination point. Namely, with this function, the timing for providing an automatic voice guidance can be detected when the vehicle reaches a point located a predetermined distance before from an intersection on the guide route, or after the vehicle has passed this intersection.

On the basis of this judgement result, appropriate phrases to be used at this guide point, including a caution sound, are selected and stored in the voice buffer 4 - 1. Subsequently, these selected phrases are transformed into voices and outputted through the ADPCM decoder 4 - 2.

In this case, the caution sound is outputted first of all and, after a predetermined time; for example, approximately 0.2 sec, has elapsed, the guidance voice is outputted successively. At the same time, the present vehicle position on the determined route is displayed in the display section 6.

Furthermore, in the case where a request signal is inputted, the route guidance section 1 - 2 outputs a command to the voice response section 4 to provide a voice guidance concerning the present vehicle position and also outputs a command to the display section 6 to display a map indicating the present place.

Furthermore, it is also possible to constitute the system in such a manner that the displayed guidance is displayed in response to the driver's request; i.e. the signal inputted through the input section 7.

The CDROM 2 serves as a data base storing all the data such as map data, voice data and so on, being required for executing the navigation. Among these data, only the voice data are memorized by being compressed through a voice compression method such as ADPCM method.

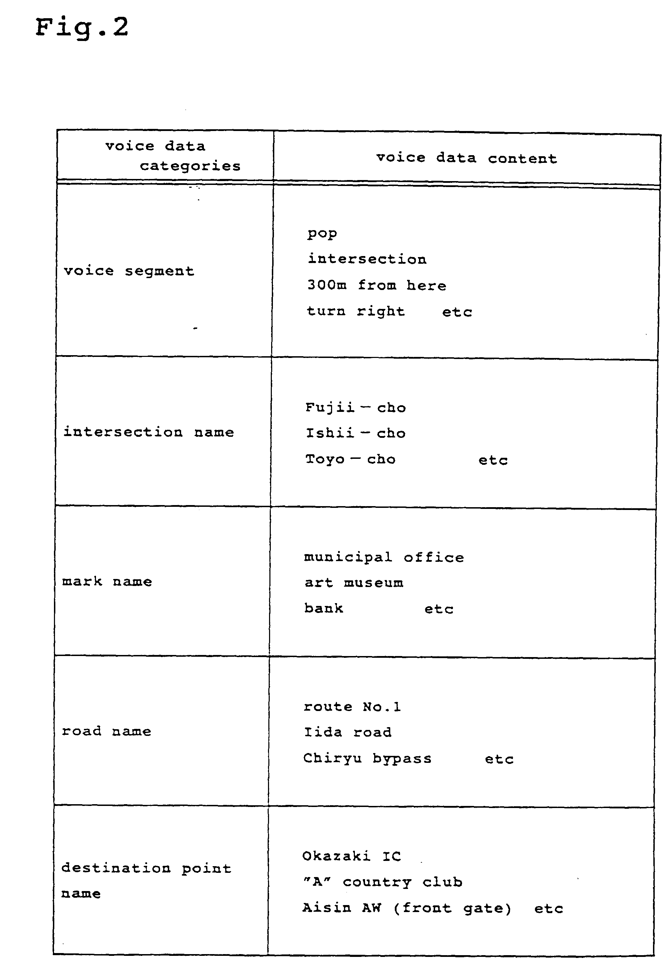

Fig.2 shows one example of the content of the voice data, being recorded in the CDROM 2. These memorized content is predetermined in accordance with the following data categories; a voice segment, an intersection name, a mark name, a road name, a destination point name, and the like. For example, "pop" "at intersection" "approximately 300 m from here" etc. are designated as the voice segment, and "Okazaki IC (interchange)" "A country club" etc. are designated as the destination point name.

The voice response section 4 synthesizes compressed voices, phrases, unified sentences, sounds and the like and outputs the synthesized result through the speaker 5. The voice data required for giving the guidance information concerning the oncoming mark point, which is closest from the present vehicle position, is written one after another into the voice buffer 4 - 1 of this voice response section 4. On the contrary, old voice data not required in this guidance information are erased successively, so that new voice data are sufficiently memorized in this voice buffer 4 - 1. Furthermore, the capacity of this voice buffer 4 - 1 is prepared in accordance with the number of phrases and, for example, is constituted by 20 phrases.

Basic phrases to be synthesized are classified into various categories such as a voice segment, an intersection name, a mark name, a road name, a target name etc. As the arithmetic section 1 can grasp a present vehicle position on the basis of a route, a travelling distance, and an advancing direction, the most preferable phrase combination can be determined from the map data base corresponding to the present vehicle position.

Thus determined phrases are transformed into analogue signals through the ADPCM decoder 4 - 2, and then issued through the speaker 5 in a form of voice response such as "Approximately 400m from here" "at Ishikawa - cho" "turn right".

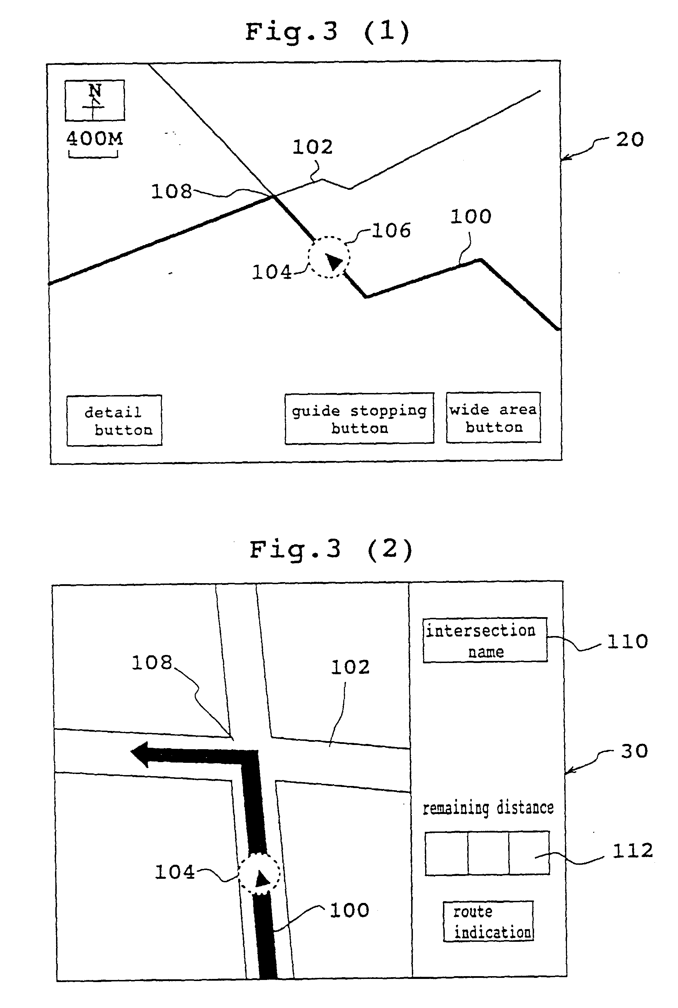

The display section 6 is disposed inside of an instrument panel adjacent to a driver's seat, so that a driver can watch the display screen shown, for example, in Fig.3 to know the present vehicle position or to obtain information concerning an oncoming route. In case of the disclosed example, the selected route is indicated by a bold line 100 and another road is indicated by a thin line 102 on the display screen 20 shown in Fig.3(1). The present vehicle position is shown by a circle mark 104, and a vehicle advancing direction is shown by an arrow 106. As a method for clearly discriminating respective roads, it is also preferable to change their colors, as well as discrimination of line thickness.

Furthermore, the above-described screen is provided with several function buttons, which are manipulated for the setting of route guidance and switching of the displayed screen or the guidance used during navigation. That is, the display section 6 is provided with several touch panels which are associated with the displayed buttons, so that above - described operation can be carried out in response to signals inputted through the touching operation of these buttons. These buttons and touch panels constitute an input signal generating device, that serves as a part of the input section 7. However, its detail explanation is omitted here.

On the display screen (i.e. a section map) 20 there are provided the following three buttons; i.e. a detail button for enlarging the present position and its vicinity area, a guide stop button for stopping the guidance, and a wide area button for displaying a wide area including the present position.

When the vehicle approaches an intersection 108 where the vehicle is scheduled to change the route, the display screen is changed to an enlarged display screen 30 shown in Fig.3(2). In Fig.3(2), an intersection name 110 and a distance 112 from the present vehicle position to this intersection are both displayed. Furthermore, upon this display exchange, a guidance voice is issued for providing a navigation guide at this intersection.

In this case, if the timing has come for the automatic voice guidance, the voice guidance is issued after a caution sound is once issued. If there is a request from the driver, the voice guidance is issued without any caution sound.

The input section 7 includes a request sensor 7 - 1, that generates a signal (a trigger) for commanding the navigation processing based on the driver's intent, so that the destination point can be inputted or the driver can immediately obtain a necessary guidance information through the voice and/or screen display when the driver wants it. Moreover, the input section 7 can be constituted such that the destination point is inputted in response to a designation of the destination point on the display screen in the display section 6.

The present position measuring section 10 acts to identify the present vehicle position on the basis of several information; i.e. a present vehicle positional information received by a GPS receiver 12 that utilizes a satellite navigation system (GPS), a direction information obtained from an azimuth instrument 8, a travelling distance information obtained from a distance meter 9, and a map information obtained from the CDROM driver 3. Thus obtained vehicle present position information is supplied to the arithmetic section 1. By the way, the azimuth instrument 8 detects an advancing direction of the vehicle on the basis of the earth's magnetism. And, the distance meter 9 detects the travelling distance on the basis of the rotation number of wheel.

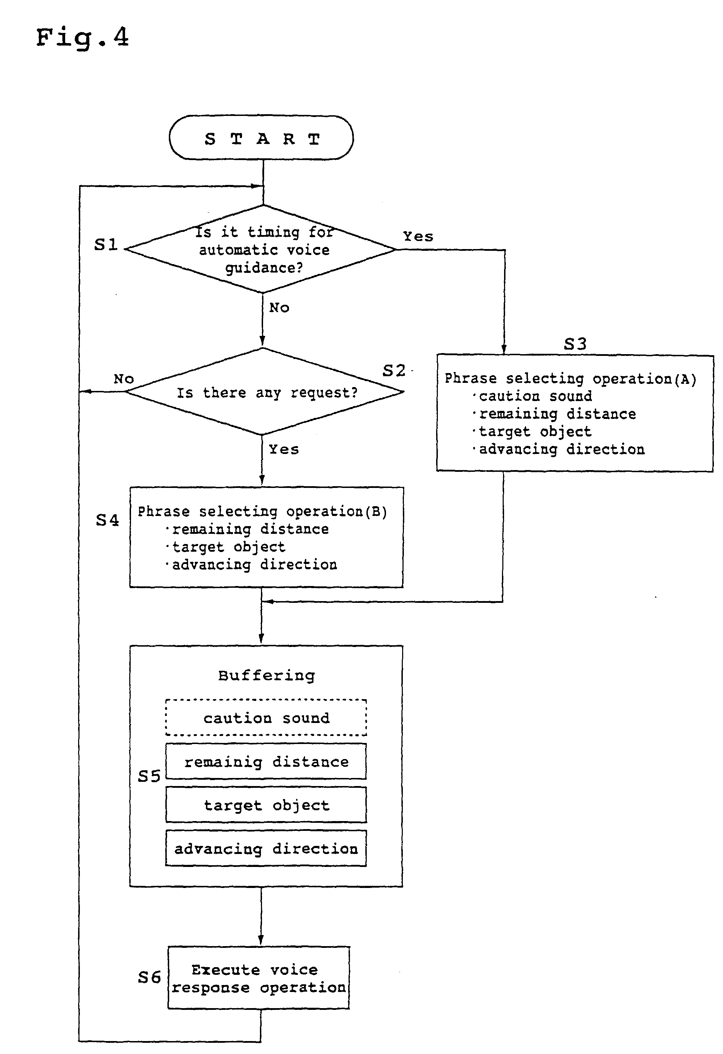

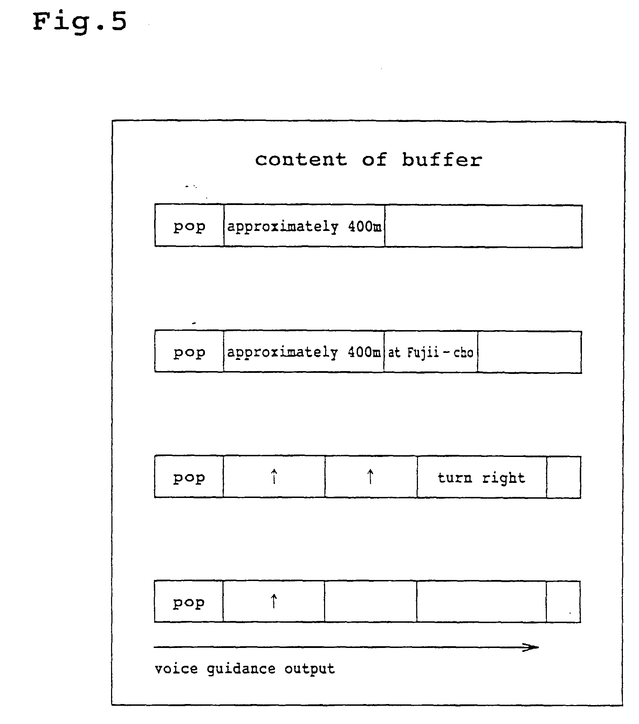

Next, the voice response processing is explained with reference to accompanying drawings. Fig.4 shows a flow chart of a voice response processing in accordance with a first embodiment of the present invention, and Fig.5 shows a content of the voice buffer. In the following explanation, "Approximately 400m from here" "at Fujii - cho" "turn right" are used as phrases.

When the vehicle is approaching the destination point, the arithmetic section 1 continues to select necessary phrases required for providing guidance information, one after another, on the basis of the present vehicle position.

First of all, it is judged in a step S1 whether or not the vehicle is approaching adjacent to a predetermined guide point; i.e. it is judged in the step S1 whether or not a timing has come for the automatic voice guidance. If the judgement in the step S1 indicates that the timing for the automatic voice guidance has not come yet, it is further judged in a step S2 whether or not there is any driver's request.

For example, if the position indicated in Fig.3(1) supposed to be the timing for the automatic voice guidance, a phrase selecting processing (A) is carried out in a step S3 in such a manner that a phrase is constructed by a caution sound, a remaining distance, a target object, and an advancing direction. Subsequently, a buffering operation is carried out in a step S5 and, in turn, a voice response operation is carried out in a step S6.

At the same time, the display screen is switched to the detail map shown in Fig.3(2) so as to display an intersection name, a distance from the present vehicle position to the destination point, and a direction to which the vehicle is scheduled to proceed after passing the intersection. When the judgement in the step S2 indicates that the driver requests the guidance information at a certain place, a phrase selecting processing (B) is carried out in a step S4 in such a manner that a phrase is constructed by a remaining distance, a target object, and an advancing direction. Subsequently, a buffering operation is carried out in the step S5 and, in turn, a voice response operation is carried out in the step S6.

The buffering operation will be explained with reference to Fig.5. The CDROM driver 3 basically accesses the CDROM 2 to select phrases and writes them in the voice buffer 4 - 1.
First of all, the CDROM driver 3 executes its accessing operation in accordance with a predetermined phrase construction. That is, the caution sound phrase "pop", the remaining distance phrase "approximately 400m from here", the target object phrase "at Fujii - cho", and the advancing direction phrase "turn right", are accessed successively. These phrases are written in the voice buffer 4 - 1.

When all the phrases constituting the guidance information to be issued as the automatic voice response or as the voice response in accordance with the driver's request have been buffered in this manner, the voice response processing is carried out to transform these buffered phrases into voice signals through the ADPCM decoder 4 - 2.

Next, another embodiment of the navigation apparatus in accordance with the present invention is explained. Though the voice response processing in the above - described embodiment is carried out in such a manner that the CDROM 2 is accessed with respect to all of these three or four phrases and then their voice data are buffered, this embodiment is different from this above - described embodiment in that the voice response is given immediately to the driver at the timing of automatic voice response or in response to the driver's request without accessing the CDROM 2.

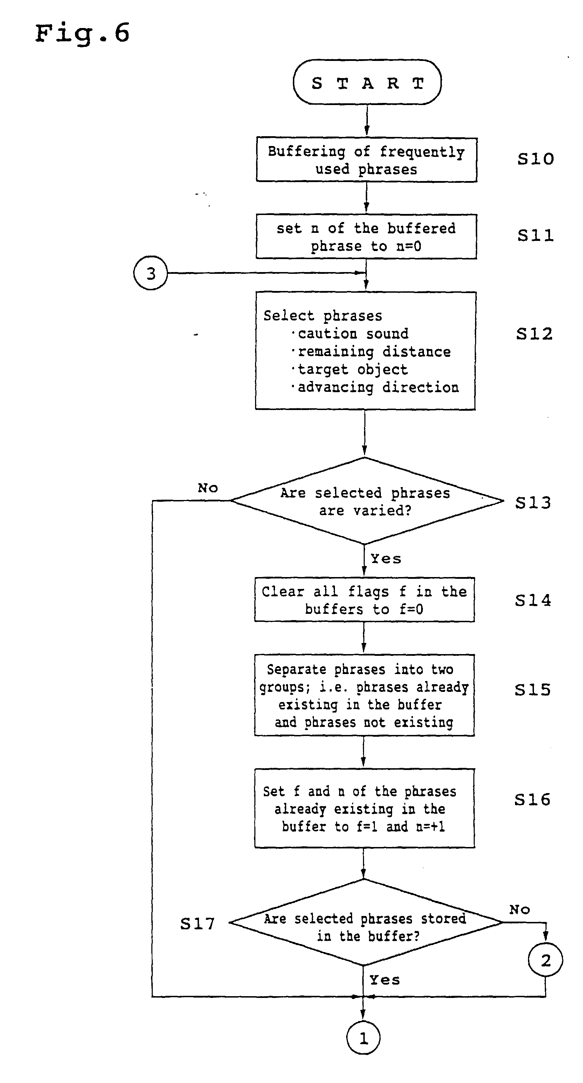

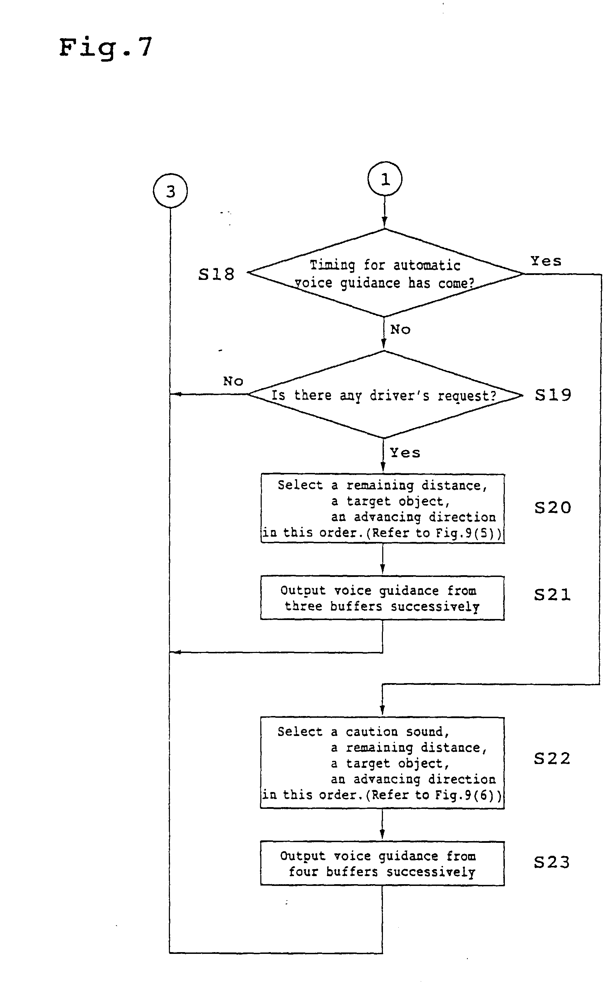

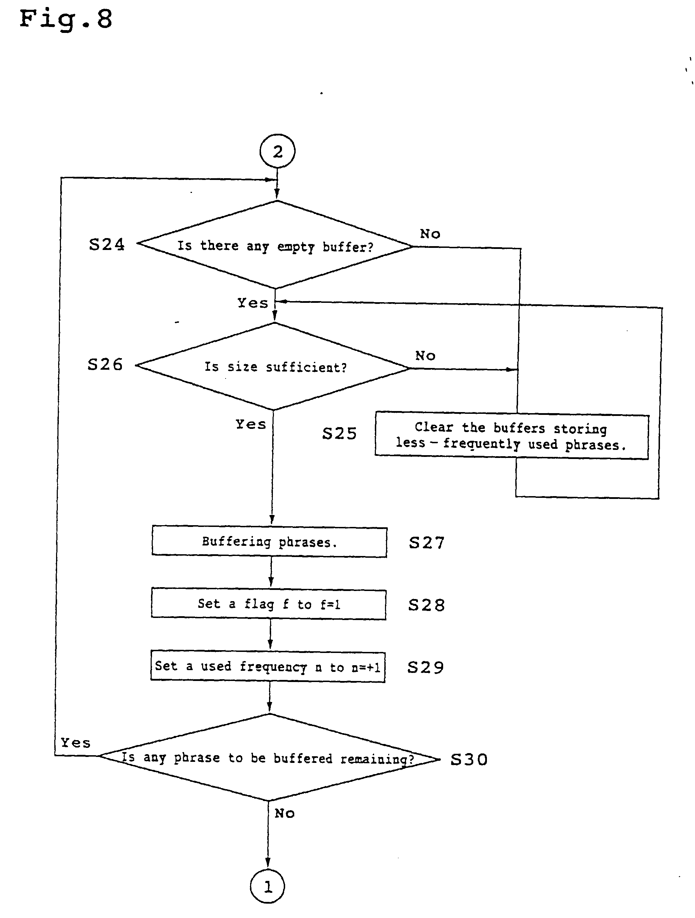

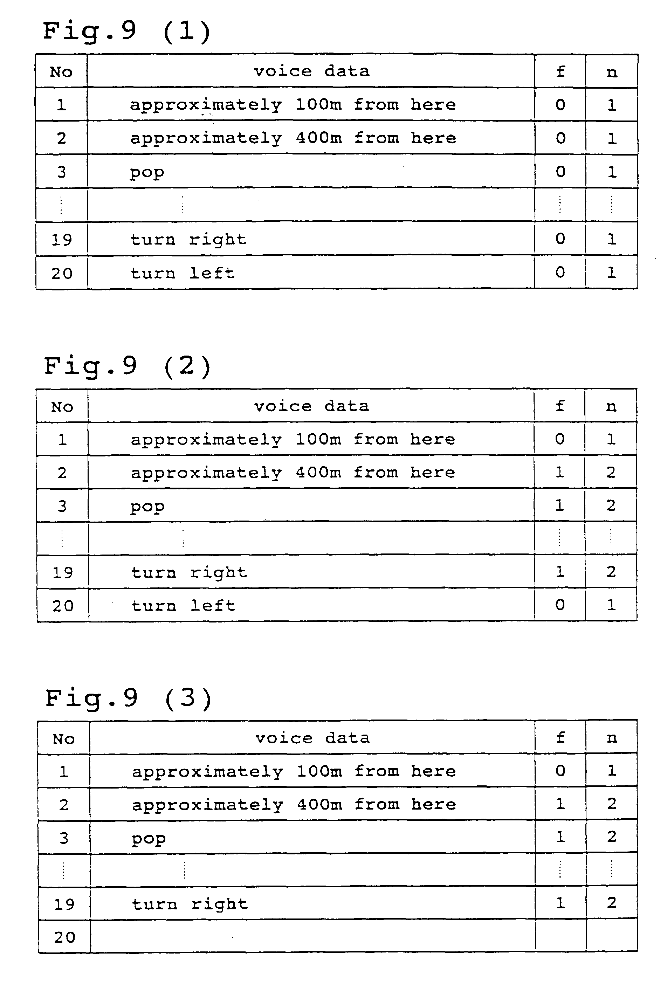

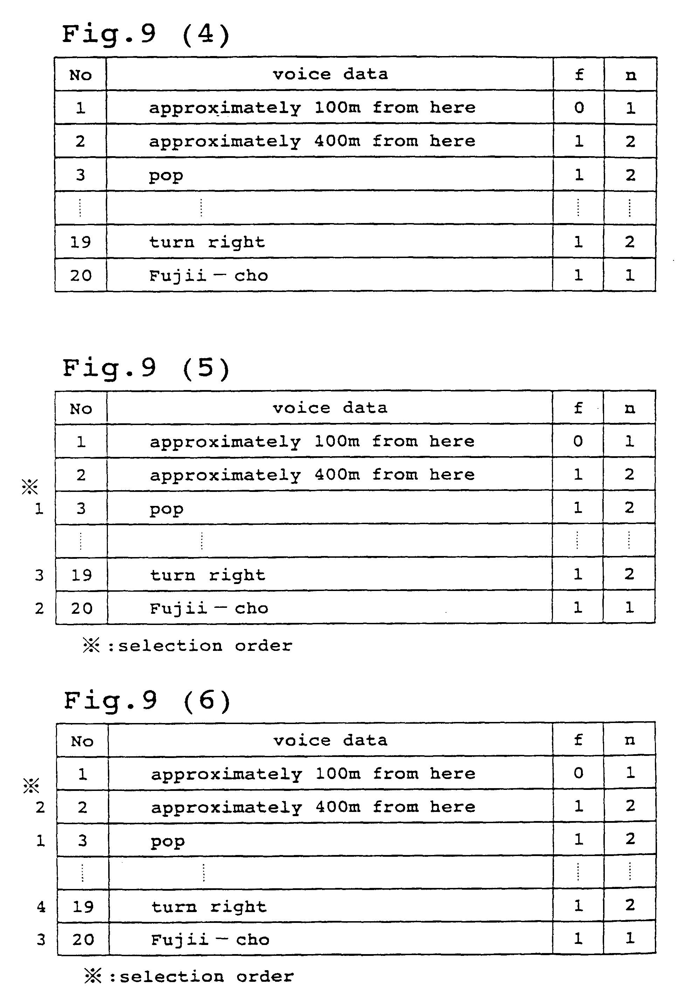

Figs. 6 to 8 show flow charts of a voice response processing executed in the navigation apparatus in accordance with this embodiment. Fig.9 shows the content of the voice buffer 4 - 1 used in this voice response processing. By the way, the voice buffer 4 - 1 has a storing capacity of 20 phrases.
The content of the voice buffer 4 - 1 is basically constituted by the combination of a phrase corresponding to voice data, an existing flag f indicating that phrase is presently selected, and a used frequency n indicating a used frequency of each phrase.

The existing flag f is set to f=1 in the case where this phrase is presently selected and, to the contrary, is set to f=0 in the case where this phrase is not selected. In the example shown in Fig.9(1), the used frequency n is set to n=1 in each phrase being first buffered. And, all the existing flags f is set to f=0 since no phrase is selected.

When the arithmetic section 1 initiates its execution, as some of repeatedly used phrases are known, these frequently used phrases such as "approximately 100m" "approximately 400m" "turn right" "turn left" and the like which indicate the remaining distance and the advancing direction etc. are buffered in a plurality of voice buffers in advance in a step S10. Then, in a step S11, the used frequency of this buffered phrase is set to "1".

Next, in a step S12, proper guidance information phrases are constructed to include a remaining distance, a target object, and an advancing direction on the basis of the determined course and the present vehicle position. For example, respective phrases of "pop" "approximately 400m from here" "at Fujii - cho" "turn right" are selected as the guidance information phrases.

Subsequently, it is judged in a step S13 whether or not the selected phrases are the same as previous one. In the case where the selected phrases are not varied, it is next judged in a step S18 whether or not the timing has come for the automatic voice response. On the other hand, in the case where the selected phrases are modified from the previous one, the flags f in the buffers are all cleared (i.e. the existing flag f is set to f=0) in a step S14, so that previously selected phrases are erased.

The selected phrases are separated into two groups; i.e. phrases already existing in the buffers and phrases not existing in the buffers, in a step S15. As the phrases already existing in the buffers should be left without being erased, the existing flags f of the guidance information phrases "approximately 400m from here" and "turn right" are set to f=1 and their used frequencies n are increased by +1 to be n=2, respectively, in a step S16.

Next, it is judged in a step S17 whether or not all the selected phrases exist in the buffer. If all the selected phrases exist in the buffer, it is checked in the step S18 if the timing has come for the automatic voice response.

If all or some of the selected phrases are missing in the buffers, it is in turn checked in a step S24 whether or not there is any empty buffer. In the case where there is no empty buffer, there will be a processing for newly providing an empty buffer. To the contrary, in the case where there is any empty buffer; for example, in the case where it is supposed that one buffer being designated by a reference No. 20 shown in Fig.9(3) is currently empty, it is subsequently checked in a step S26 whether or not all the selected phrases can be stored in this buffer. That is, it is checked if the size of this empty buffer is sufficient or not in the step S26.

In the case where there is no empty buffer or in the case where the empty buffer does not have a sufficient size, the used frequencies of the phrases currently existing in the buffers are checked and some of buffers occupied by less - frequently used phrases are cleared in a step S25. In more detail, to determine the buffer to be erased, the used frequency is taken into consideration. Normally, once the vehicle has passed one certain intersection, the same intersection name is seldom used again. Therefore, the buffer storing this intersection name is first of all erased.

When one buffer is cleared, the size of the buffer is checked again in the step S26. By repeating this routine, it becomes possible to prepare a buffer having a size fitting to the selected phrases.

When a buffer (for example, the buffer No. 20 shown in Fig.9(4)) is newly prepared, the selected phrase "Fujii - cho" is buffered in this buffer. And, the existing flag f is set to "1" in a step S28 and the used frequency n is set to "+1" in a step S29. Thereafter, it is checked in a step S30 whether or not there is any phrase to be buffered. If any phrase is left, the processing is again repeated from the step S24.

When all the selected phrases are completed buffered, it is then checked in the step S18 if the timing has come for the automatic voice response or not. If the judgement in the step S18 is NO, it is then judged in a step S19 whether or not there is any driver's request. If there is no driver's request, the processing returns to the step S12.

If there is any driver's request, as the buffers are filled with the phrases selected in the previous processing, phrases are selected in the order of the remaining distance, the target object, and the advancing direction, as shown in Fig.9(5), in a step S20. Then, these selected phrases are successively read out from the buffer 4 - 1 and transformed into voice signals through the ADPCM decoder 4 - 2, and then outputted from the speaker 5, in a step S21. As the caution sound "pop" is not selected in the case where there is any driver's request, it is advantageous in that the driver can listen the voice response without any time lag.

If the judgement in the step S18 indicates that there is no driver's request, phrases are selected in the order of the caution sound, the remaining distance, the target object, and the advancing direction, as shown in Fig.9(6), in a step S22. Then, these selected phrases are successively read out from the buffer 4 - 1 and transformed into voice signals through the ADPCM decoder 4 - 2, and then outputted from the speaker 5, in a step S23. In the case where the automatic voice response is provided, the caution sound "pop" is issued in the beginning, and then the voice response is provided so as to follow this caution sound.

As apparent from above - described explanation, in accordance with the present invention, the following functions and effects are enjoyed.
(a) The control means automatically provides the guidance information in a form of the voice response in accordance with the driver's request. Therefore, the driver can listen this guidance information while paying attention on driving safety.
   At the same time, the driver can request the guidance information anytime and anywhere he wants to know it, in order to listen the voice response of the latest guidance information.
(b) This system directly accesses the phrases which are prepared in the buffers beforehand, without accessing the data base in response to the driver's request. A waiting time from the driver's request until the voice response is actually issued can be extremely shortened. Therefore, the driver can drive the car safely, by being given the guidance information sufficiently in advance.
(c) Buffers always store the frequently used phrases, so that the CDROM is prevented from being accessed every time when these frequently used phrases are selected. Therefore, it becomes possible to speed up an overall processing speed.
(d) In the case where one buffer does not have enough size, the phrases are buffered separately in a plurality of buffers. Therefore, the real - time voice response of the guidance information can be realized by the smallest number of buffers. In other words, it is concluded that the buffers can be effectively utilized in accordance with the present invention.

## Claims

1. A navigation apparatus comprising:
a) current position detecting means (10) for detecting a current position of a vehicle;
b) information storing means (2,3) for storing map information and guidance information;
c) route storing means (11) for storing route information;
d) manually operated request means (7) for generating a request signal for requesting information regarding the next guidance point on a current route that needs guidance;
e) control means (1) for retrieving and notifying guidance information regarding the next guidance point that needs guidance from the information storing means; and
f) output means (4) for outputting in the form of voices the guidance information processed by the control means
characterized in that
g) the control means (1) is adapted to process the guidance information on the basis of a current position and the route information stored in the route storing means (11).

2. A navigation apparatus according to claim 1, wherein the guidance information regarding the next guidance point is the distance between the current position and the next guidance point.

3. A navigation apparatus according to claim 1 or 2, wherein the control means (1) decides whether the vehicle reaches a predetermined guidance point and controls the automatic output of the guidance information when the vehicle reaches said predetermined point and the output means (4) automatically outputs the guidance information in response to the control means (1), if the driver does not issue any request.

4. A navigation apparatus according to claim 3, wherein the control means (1) comprises means for determining whether guidance has been requested automatically, and means for determining whether guidance has been requested by the request means, and wherein if it is determined that guidance has been requested by the request means while a guidance is being provided, the control means cancels the current guidance and operates to provide the guidance requested.

5. A navigation apparatus according to claim 4, wherein when it is determined that guidance has been requested by the request means, the control means (1) uses a manner of notifying guidance that differs from a manner of notifying guidance used when it is determined that guidance has been automatically requested.

6. A navigation apparatus according to any of claims 1 to 5, wherein
a) the guidance information includes a plurality of separate voice phrases;
b) guidance information storing means (4-1) are provided for temporarily storing the guidance information retrieved by the control means separately for each voice phrase; and
c) the control means (1) retrieves guidance information separately for individual voice phrases from the information storing means (2,3).

7. A navigation apparatus according to claim 6, wherein the control means (1) determines whether each of the voice phrases required for the next guidance is stored in the guidance information storing means, and the control means (1) retrieves from the information storing means only the voice phrases that are needed for the next guidance but not stored in the guidance information storing means (4-1), and stores the voice phrases into the guidance information storing means (4-1).

8. A navigation apparatus according to claim 6 or 7, wherein the control means (1) includes comparing means for comparing frequencies of use of individual voice phrases of the guidance information stored in the guidance information storing means (4-1), and the control means updates the guidance information on the basis of the frequencies of use of the individual voice phrases.

9. A navigation apparatus according to any of claims 6 to 8, wherein the control means (1) retrieves necessary voice phrases from the guidance information storing means (4-1) and composes a piece of guidance information by using the voice phrases retrieved.

10. A navigation apparatus according to claim 9, wherein the control means (1) changes manners of notifying guidance by retrieving alert sound data from the guidance information storing means (4-1) and using the alert sound data to notify guidance only when it is determined that guidance has been automatically requested.

11. A navigation apparatus according to any of claims 1 to 10, which calculates a route to a destination and traces a vehicle to perform guidance along the route.

## Patentansprüche

1. Navigationsvorrichtung mit:
a) einer Detektionseinrichtung (10) für die aktuelle Position zum Detektieren einer aktuellen Position eines Fahrzeugs;
b) einer Informationsspeichereinrichtung (2, 3) zum Speichern von Karteninformationen und Leitinformationen;
c) einer Routenspeichereinrichtung (11) zum Speichern von Routeninformationen;
d) einer manuell betätigten Anforderungseinrichtung (7) zum Erzeugen eines Anforderungssignals zum Anfordern von Informationen über den nächsten Leitpunkt auf einer aktuellen Route, an dem eine Leitung notwendig ist;
e) einer Steuereinrichtung (1) zum Auslesen und Mitteilen von Leitinformationen über den nächsten Leitpunkt, an dem eine Leitung notwendig ist, von der Informationsspeichereinrichtung; und
f) einer Ausgabeeinrichtung (4) zum Ausgeben der durch die Steuereinrichtung verarbeiteten Leitinformationen in Form von Sprachausgaben,
dadurch gekennzeichnet, daß
g) die Steuereinrichtung (1) geeignet ist, die Leitinformationen auf der Grundlage einer aktuellen Position und der in der Routenspeichereinrichtung (11) gespeicherten Routeninformationen zu verarbeiten.

2. Navigationsvorrichtung nach Anspruch 1, wobei die Leitinformation über den nächsten Leitpunkt die Entfernung zwischen der aktuellen Position und dem nächsten Leitpunkt darstellen.

3. Navigationsvorrichtung nach Anspruch 1 oder 2, wobei die Steuereinrichtung (1) entscheidet, ob das Fahrzeug einen vorbestimmten Leitpunkt erreicht, und die automatische Ausgabe der Leitinformation steuert, wenn das Fahrzeug den vorbestimmten Punkt erreicht, und die Ausgabeeinrichtung (4) die Leitinformation als Reaktion auf die Steuereinrichtung (1) automatisch ausgibt, wenn der Fahrer keine Anforderung erteilt.

4. Navigationsvorrichtung nach Anspruch 3, wobei die Steuereinrichtung (1) aufweist: eine Einrichtung zum Bestimmen, ob die Leitung automatisch angefordert wurde, und eine Einrichtung zum Bestimmen, ob die Leitung durch die Anforderungseinrichtung angefordert wurde, und wobei bei der Bestimmung, daß die Leitung durch die Anforderungseinrichtung angefordert wurde, während eine Leitung erfolgt, die Steuereinrichtung die derzeitige Leitung annulliert und so arbeitet, daß sie die angeforderte Leitung bereitstellt.

5. Navigationsvorrichtung nach Anspruch 4, wobei bei der Bestimmung, daß die Leitung durch die Anforderungseinrichtung angefordert wurde, die Steuereinrichtung (1) eine Art der Leitungsmitteilung verwendet, die sich von der Art der Leitungsmitteilung unterscheidet, die bei der Bestimmung verwendet wird, daß die Leitung automatisch angefordert wurde.

6. Navigationsvorrichtung nach einem der Ansprüche 1 bis 5, wobei
a) die Leitinformationen mehrere getrennte sprachliche Phrasen aufweisen;
b) eine Leitinformations-Speichereinrichtung (4-1) zum Zwischenspeichern der Leitinformation vorgesehen ist, die durch die Steuereinrichtung für jede sprachliche Phrase getrennt ausgelesen werden; und
c) die Steuereinrichtung (1) Leitinformationen getrennt für einzelne sprachliche Phrasen aus der Informationsspeichereinrichtung (2, 3) ausliest.

7. Navigationsvorrichtung nach Anspruch 6, wobei die Steuereinrichtung (1) bestimmt, ob jede der für die nächste Leitung erforderlichen sprachlichen Phrasen in der Leitinformations-Speichereinrichtung gespeichert ist, und die Steuereinrichtung (1) aus der Informationsspeichereinrichtung nur die sprachlichen Phrasen ausliest, die für die nächste Leitung benötigt werden, aber nicht in der Leitinformations-Speichereinrichtung (4-1) gespeichert sind, und die sprachlichen Phrasen in der Leitinformations-Speichereinrichtung (4-1) speichert.

8. Navigationsvorrichtung nach Anspruch 6 oder 7, wobei die Steuereinrichtung (1) über eine Vergleichseinrichtung zum Vergleichen von Benutzungshäufigkeiten einzelner sprachlicher Phrasen der Leitinformation verfügt, die in der Leitinformations-Speichereinrichtung (4-1) gespeichert sind, und die Steuereinrichtung die Leitinformation auf der Grundlage der Benutzungshäufigkeiten der einzelnen sprachlichen Phrasen aktualisiert.

9. Navigationsvorrichtung nach einem der Ansprüche 6 bis 8, wobei die Steuereinrichtung (1) notwendige sprachliche Phrasen aus der Leitinformations-Speichereinrichtung (4-1) ausliest und einen Teil der Leitinformation unter Verwendung der ausgelesenen sprachlichen Phrasen zusammensetzt.

10. Navigationsvorrichtung nach Anspruch 9, wobei die Steuereinrichtung (1) Arten der Leitungsmitteilung ändert, indem sie Warntondaten aus der Leitinformations-Speichereinrichtung (4-1) nur ausliest und die Warntondaten zur Leitungsmitteilung nur verwendet, wenn bestimmt wird, daß die Leitung automatisch angefordert wurde.

11. Navigationsvorrichtung nach einem der Ansprüche 1 bis 10, die eine Route zu einem Ziel berechnet und ein Fahrzeug verfolgt, um eine Leitung auf der Route durchzuführen.

## Revendications

1. Instrument de navigation comprenant :
a) un dispositif de détection de position instantanée (10) servant à détecter la position instantanée d'un véhicule;
b) un dispositif de stockage d'informations (2, 3) servant à stocker des informations de carte et des informations de guidage;
c) un dispositif de stockage d'itinéraire (11) servant à stocker des informations d'itinéraire;
d) un dispositif de demande actionné manuellement (7) servant à générer un signal de demande pour demander des informations concernant le point de guidage suivant sur un itinéraire courant qui nécessite un guidage;
e) un dispositif de commande (1) servant à extraire et à notifier des informations de guidage concernant le point de guidage suivant qui nécessite un guidage du dispositif de stockage d'informations; et
f) un dispositif de sortie (4) servant à sortir sous forme vocale les informations de guidage traitées par le dispositif de commande
caractérisé en ce que
g) le dispositif de commande (1) est adapté pour traiter les informations de guidage en se basant sur une position instantanée et les informations d'itinéraire stockées dans le dispositif de stockage d'itinéraire (11).

2. Instrument de navigation selon la revendication 1, dans lequel l'information de guidage concernant le point de guidage suivant est la distance entre la position instantanée et le point de guidage suivant.

3. Instrument de navigation selon la revendication 1 ou 2, dans lequel le dispositif de commande (1) décide si le véhicule atteint un point de guidage prédéterminé et commande la sortie automatique des informations de guidage quand le véhicule atteint ledit point prédéterminé et le dispositif de sortie (4) sort automatiquement les informations de guidage en réponse au dispositif de commande (1), si le conducteur n'émet aucune demande.

4. Instrument de navigation selon la revendication 3, dans lequel le dispositif de commande (1) comprend un dispositif servant à déterminer si le guidage a été demandé automatiquement, et un dispositif servant à déterminer si le guidage a été demandé par le dispositif de demande, et dans lequel s'il est déterminé que le guidage a été demandé par le dispositif de demande alors qu'un guidage est fourni, le dispositif de commande annule le guidage courant et agit de façon à fournir le guidage demandé.

5. Instrument de navigation selon la revendication 4, dans lequel lorsqu'il est déterminé que le guidage a été demandé par le dispositif de demande, le dispositif de commande (1) utilise une manière de notifier le guidage qui diffère d'une manière de notifier le guidage utilisée lorsqu'il est déterminé que le guidage a été demandé automatiquement.

6. Instrument de navigation selon l'une quelconque des revendications 1 à 5, dans lequel
a) l'information de guidage inclut une pluralité de phrases vocales distinctes;
b) les dispositifs de stockage (4-1) d'informations de guidage sont prévus pour stocker temporairement les informations de guidage extraites par le dispositif de commande séparément pour chaque phrase vocale; et
c) le dispositif de commande (1) extrait des informations de guidage du dispositif de stockage d'informations (2, 3) séparément pour des phrases vocales individuelles.

7. Instrument de navigation selon la revendication 6, dans lequel le dispositif de commande (1) détermine si chacune des phrases vocales requises pour le guidage suivant est stockée dans le dispositif de stockage d'informations de guidage, et le dispositif de commande (1) extrait du dispositif de stockage d'informations uniquement les phrases vocales qui sont nécessaires pour le guidage suivant mais non stockées dans les dispositifs de stockage (4-1) d'informations de guidage, et stocke les phrases vocales dans les dispositifs de stockage (4-1) d'informations de guidage.

8. Instrument de navigation selon la revendication 6 ou 7, dans lequel le dispositif de commande (1) inclut un dispositif de comparaison servant à comparer les fréquences d'utilisation de phrases vocales individuelles des informations de guidage stockées dans les dispositifs de stockage (4-1) d'informations de guidage, et le dispositif de commande met à jour les informations de guidage en se basant sur les fréquences d'utilisation des phrases vocales individuelles.

9. Instrument de navigation selon l'une quelconque des revendications 6 à 8, dans lequel le dispositif de commande (1) extrait des dispositifs de stockage (4-1) d'informations de guidage des phrases vocales nécessaires et compose une information de guidage en utilisant les phrases vocales extraites.

10. Instrument de navigation selon la revendication 9, dans lequel le dispositif de commande (1) change les manières de notifier le guidage en extrayant des données de sons d'alerte des dispositifs de stockage (4-1) d'informations de guidage et en utilisant les données de sons d'alerte pour notifier le guidage uniquement lorsqu'il est déterminé que le guidage a été demandé automatiquement.

11. Instrument de navigation selon l'une quelconque des revendications 1 à 10, qui calcule un itinéraire allant jusqu'à une destination et suit un véhicule à la trace pour réaliser un guidage le long de l'itinéraire.
